**Europäisches Patentamt**

**European Patent Office**

**Office européen des brevets**

(19)

(11) Veröffentlichungsnummer: **0 154 881**
**B1**

(12) **EUROPÄISCHE PATENTSCHRIFT**

(45) Veröffentlichungstag der Patentschrift:
**23.11.88**

(51) Int. Cl.⁴: **G 01 N 27/28**

(21) Anmeldenummer: **85102076.8**

(22) Anmeldetag: **26.02.85**

(54) **Messanordnung mit ionenselektiven Elektroden.**

(30) Priorität: **16.03.84 DE 3409666**

(43) Veröffentlichungstag der Anmeldung:
**18.09.85 Patentblatt 85/38**

(45) Bekanntmachung des Hinweises auf die Patenterteilung:
**23.11.88 Patentblatt 88/47**

(84) Benannte Vertragsstaaten:
**AT BE CH DE FR GB IT LI LU NL SE**

(56) Entgegenhaltungen:
**DE-A-3 116 321**
**GB-A-2 054 869**
**US-A-4 160 714**
**US-A-4 447 775**

(73) Patentinhaber: **EPPENDORF- NETHELER- HINZ GMBH, Barkhausenweg 1, D-2000 Hamburg 63 (DE)**

(72) Erfinder: **Hofmeier, Gerhard, Dr. rer. nat., Grönkamp 29, D-2000 Hamburg 65 (DE)**
Erfinder: **Tscheu, Wolfgang, Ing.- grad., Schlesienstrasse 36, D-2359 Henstedt- Ulzburg 2 (DE)**

(74) Vertreter: **Kretzschmar, Otto Robert, Dipl.- Ing., Beim Strohhause 34, D-2000 Hamburg 1 (DE)**

LIBER, STOCKHOLM 1988

## Beschreibung

Die Erfindung betrifft eine Meßanordnung mit ionenselektiven Elektroden an einem Meßkanal mit Ein- und Auslässen, wobei die Elektroden an der Wand dieses Meßkanals fluchtend zur Wand angeordnet sind.

Dabei wird auch eine Anordnung einbezogen, in welcher für alle Elektroden Kontakt- und Andruckfedern vorgesehen sind.

Einbezogen wird dabei auch eine bekannte Ausführungsform, in welcher der Meßkanal in durchsichtigen Bauteilen geführt ist. Dieses hat Vorteile in der Überwachung.

Eine Meßanordnung der eingangs angegebenen Ausführung ist aus den DE-OS-2 652 370 und DE-OS-2 726 772 mit geraden Meßkanälen bekannt. Bei diesen Ausführungen werden die Meßelektroden eingeschraubt. Die Einschraubung hat bereits den Nachteil, daß kein gleichmäßiger Einsatz zum Meßkanal vorhanden ist, weil unwillkürlich verschiedene Schraubkräfte aufgebracht werden können, oder aber auch aufgrund von Verunreinigungen nicht die gleiche Endlage entsteht. Außerdem sind die ionenselektiven Elektroden teilweise mit einer Schutzmembrane an der sensitiven Fläche ausgeführt. Diese Schutzmembrane wird vielfach beim Einschrauben des die eigentliche Elektrodenfläche umgebenden Dichtringes an eine Anlage zerstört, so daß dann einerseits ungleichmäßige Meßergebnisse erreicht werden, andererseits aber die weitere Brauchbarkeit herabgesetzt ist, ohne daß dieses zunächst erkennbar ist.

Der Meßkanal hat Meßkammern in Form einer Vertiefung, die etwas flacher ist als die anschließenden Kanäle. Dadurch ergibt sich ein Stau und ein ungleichmäßiger Durchfluß mit Umlenkung der zu messenden Flüssigkeit, wobei auch ein Abriß der Strömung nicht ausgeschlossen ist.

Gemäß der DE-OS-3 116 321 sind halbkugelförmige Fühlerräume zwischen zickzack-artig geraden hin- und hergehenden Meßkanälen angeordnet. In diese Fühlerräume ragen die Elektroden hinein, so daß sie in undefinierter Weise umspült werden bzw. bei den angegebenen Einmündungen der Meßkanäle die durchströmende Flüssigkeit abhebt. Auch wenn der Meßvorgang im stationären Zustand mit ruhender Flüssigkeit durchgeführt wird, ergibt sich daher bei dieser Ausführungsform keine Sicherheit für eine gleichmäßige Benetzung der Elektroden, abgesehen davon, daß auch hier Verschleppungsfehler auftreten können, weil keine glatte Durchströmung, sondern ein Stau und eine Verwirbelung mit Toträumen entstehen, so daß die Spülung der Meßelektroden unsicher, jedenfalls nicht gleichmäßig sichergestellt ist. Bei den bekannten Ausführungen sind Kabelverbindungen zu den Elektroden mit dem Nachteil vorhanden, daß Störungen elektrischer Art vom Sensor, d. h. der Elektrode zur Signalverarbeitung eingefangen werden können.

Aus der DE-OS-3 116 321 ist im übrigen auch bekannt, daß die Durchström-Zelle aus einem durchsichtigen Material besteht und ferner, daß die Elektroden in axialer Richtung durch eine Druckfeder gegen eine Abdichtung angedrückt werden, um in dieser Lage gehalten zu sein, in welcher sie in den halbkugelförmigen Meßraum hineinragen. Dieser federnde Andruck ist zwar schon vorteilhaft, schließt aber gerade im Hinblick auf den Andruck an eine Dichtung mit Elastizität nicht aus, daß in dieser Ausführung mit geraden Meßkanalstrecken eine gleichmäßige Beaufschlagung der Elektroden nicht gewährleistet ist.

In den US PS-4 160 714 und in der GB-2 054 869 A sind Meßanordnungen gezeigt, in denen Meßkammern besonderer Ausgestaltung durch gerade Verbindungskanäle verbunden sind. Durch diese Ausgestaltungen wird keine gleichbleibende Bespülung der Elektroden gewährleistet. Die gerade Ausführung der Verbindungskanäle nach der US PS hat den besonderen Zweck einer einfachen Bearbeitungsfähigkeit und soll auch die Reinigung erleichtern. Nach der GB Veröffentlichung wird eine Reinigung durch besondere Sperrschichten zur Verlängerung der Standzeit in einer besonderen Konstruktion entbehrlich.

Der Erfindung liegt die Aufgabe zugrunde, eine Meßanordnung der eingangs angegebenen Art so auszuführen, daß, insbesondere auch unter Berücksichtigung des Einsatzes von Meßflüssigkeit im Mikroliterbereich, jeweils eine sichere Abspülung der Reste einer abgezogenen Probenflüssigkeit an den Meßelektroden erfolgt und die nachkommende Probe der Meßflüssigkeit sicher an die Elektrodenflächen geführt wird. Dabei sollen insbesondere Störungen elektrischer Art der Auswertung und im Verlauf des Übergangs zu der Auswertung vermieden werden.

Störungen elektrischer Art beziehen dabei solche im Verlauf des Übergangs, d. h. im bekannten Kabelweg kapazitive Störungen durch Bewegungen desselben ein, wobei auch andere äußere Einflüsse wirksam werden können.

Die Aufgabe wird erfindungsgemäß dadurch gelöst, daß der Meßkanal im Bereich und einschließlich des Durchströmungsabschnittes vor und hinter jeder Elektrode gekrümmt ausgeführt ist und die Elektroden in der bezüglich der Krümmung äußeren Wand angeordnet sind.

Hierdurch wird gewährleistet, daß einerseits die Probenflüssigkeit unmittelbar an der Elektrodenfläche vorbeifließt, andererseits aber auch zwischen verschiedenen Proben eine einwandfreie Spülung gerade an der Elektrodenfläche erfolgt. Es ergibt sich eine Meßgenauigkeit dadurch, daß jeweils die zu messende Probenflüssigkeit frei von Verschleppungsfehlern an die Meßelektroden gebracht wird, was durch den besonderen Spüleffekt aufgrund der gekrümmten Meßkanäle und die diesbezügliche Anordnung der Meßelektroden erreicht wird.

Weiterhin ist durch die Führung der Probenflüssigkeit im gekrümmten Meßkanal die Benetzung und Berührung an den Elektrodenflächen gewährleistet, selbst wenn die Messung im Stillstand der Probenflüssigkeit erfolgt. Durch die Zuführung und den verbleibenden wirksamen Atmosphärendruck ergibt sich unter Vermeidung von ungünstigen Randlaminarströmungen eine günstige Führung der Probenflüssigkeit an den Elektroden, gleichzeitig aber auch in Verbindung mit dem Spüleffekt die Vermeidung von Verstopfungen, Verkrustungen oder Rückständen, besonders an den Elektrodenflächen.

Gemäß einer weiteren, insbesondere damit im Zusammenhang stehenden vorteilhaften Ausführung, hat die Anordnung eine Abschirmung aus einer geschlossenen, elektrisch leitenden Abdeckung, insbesondere in Form eines metallischen Deckels, und zwar insbesondere dann, wenn die Anordnung in einem Gerätegehäuse als Unterteil vorgesehen ist. Die elektrisch leitende Abdeckung bezieht eine solche auch aus leitendem Kunststoff oder der Anordnung eines Metalldrahtgewebes ein.

In einer Ausführung, in welcher für alle Elektroden Kontakt- und Andruckfedern vorgesehen sind, wird auch die Voraussetzung sowohl für eine abgeschirmte Ausführung als auch für einen gleichmäßigen Einsatz aller Elektroden geschaffen. Dabei ist die Ausführung als Gerätegehäuse mit einem Deckel besonders günstig, der durch ein Gelenk angelenkt ist, welches zur Führung des Deckels und Selbstausrichtung aufgrund der Reaktionskräfte an enthaltenen Kontakt- und Andruckfedern ein Spiel aufweist und selbstausrichtend nachgiebig gelagert ist. Gerade in Verbindung mit der Anordnung der Elektroden wird am gekrümmten Meßkanal auch ein gleichmäßiger Andruck erreicht.

Eine solche Ausführung wird in einer bevorzugten Ausgestaltung noch dadurch verbessert, daß in dem Deckel Elemente einer Auswertschaltung mit Wandlern und Verstärkern angeordnet sind und zwischen den Kontaktfedern und den Elementen ein durchgehender Kontaktbolzen als mechanisch starre elektrische Verbindung angeordnet ist, in der ein Schutzwiderstand angeordnet ist. Verluste durch flexible Verbindungen werden vermieden. Der elektrische Weg ist starr ausgeführt. Starre Kontakte im hochohmigen Bereich werden bevorzugt, um Störungen kapazitiver Art durch mechanische Bewegungen auszuschließen. Der Schutzwiderstand verhindert mit Strombegrenzungsfunktion bei geöffnetem Deckel Beeinträchtigungen durch unmittelbare Berührung der Kontakte durch die die Anordnung benutzende Person.

Dadurch ergibt sich insgesamt eine Meßanordnung, die optimale Meßergebnisse liefert.

Unter obigen Gesichtspunkten eines gekrümmten Meßkanals besteht in einer zweckmäßigen Ausführung der Meßkanal aus mehreren, gegebenenfalls gegensinnig gekrümmten Abschnitten, und in jedem Abschnitt ist eine Elektrode angeordnet. Dabei wird eine schlangenlinienförmig hin- und hergehende Windung des Meßkanals einbezogen, ferner aber auch in einer bevorzugten Ausführungsform, daß der Meßkanal in Form einer Schraubenlinie ausgeführt ist und die Elektroden in verschiedener Höhe angeordnet sind.

Schon in dieser Ausgestaltung sind die Elektroden auf geringstem Raum, aber in verschiedenen Ebenen angeordnet, wobei für die Festlegungsmittel außen mehr Platz vorhanden ist als die im Meßkanal vorgesehene recht enge Zuordnung der Meßelektroden, die im Sinne eines geringen Probevolumens erstrebenswert ist, an sich in einer anderen Anordnung bieten würde.

In der besonders bevorzugten Ausführungsform, auch unter diesem Gesichtspunkt, ist der Meßkanal im wesentlichen kreisförmig, jedoch mit Anfang und Ende in Abstand auf der Kreislinie ausgeführt und die Elektroden sind insbesondere sternförmig außen angeordnet. Hierdurch kann eine scheibenartige Elektrodenanordnung eingesetzt werden, die sternförmig ausgeführt ist und außen einen erheblichen Zugangsraum zu den Elektroden hat, was auch für die vorhergehende Ausführungsform gilt, aber bei der im wesentlichen kreisförmigen, insbesondere im wesentlichen C- förmigen Anordnung besondere Vorteile mit sich bringt.

Bevorzugt wird dabei, daß die Elektroden in radiale Stecköffnungen eingesetzt sind und für alle Elektroden ein konzentrischer Kranz von Kontakt- und Andruckfedern vorgesehen ist. Durch diese in der sternförmigen Elektrodenanordnung gleichförmige Einwirkung der Kontakt- und Andruckfedern wird auch bei Einsatz von Abdichtungen an den Elektrodenköpfen gewährleistet, daß ein absolut gleichmäßiger Andruck vorgesehen ist. Hierbei sind miteinander korrespondierende, radialsymmetrische Andruck- und Einstellanordnungen vorgesehen.

Die Aufgabe des Kranzes wird in einer besonders zweckmäßigen Ausführung zugleich in Verbindung mit anderen Vorteilen durch den erwähnten Deckel übernommen. Mit diesem wird nicht nur ein in der Betriebsstellung an sich geschlossenes Gehäuse geschaffen, sondern zugleich in diesem Zusammenhang ein gleichmäßiger Andruck aller Elektroden.

Zweckmäßig wird einbezogen, daß an dem den Meßkanal enthaltenden, im wesentlichen runden Gehäusebauteil parallel zu den Stecköffnungen Rastfedern für die Elektroden angeordnet sind, welche in Rastausnehmungen eingreifen, die an den Elektroden vorgesehen und länger als das Rastelement ausgeführt sind. Hierbei handelt es sich um Vorabhaltung, die nicht den radialsymmetrischen Andruck beeinträchtigt.

Wenn auch in einer oben angegebenen Anordnung durchsichtige Bauteile schon vorhanden sind, dann wird hier durch die Erfindung mit der konzentrischen, d. h. praktisch sternförmigen Anordnung der Meßelektroden eine besonders günstige Ausgestaltung dadurch erreicht, daß in dem runden Gehäusebauteil ein zentrisch in ihm angeordneter durchsichtiger Meßkanalzylinder vorgesehen ist, welcher eine nach oben offene Einbuchtung zur visuellen Kontrolle des Meßkanals aufweist. Zweckmäßig ist die Einbuchtung als kegelförmige nach oben offene Ausnehmung ausgeführt, die einen Flankenwinkel von etwa 45° besitzt. Dadurch ist ein besonders günstiger Einblick rundum möglich.

Es versteht sich, daß zweckmäßig innerhalb des Deckels im Verlauf des Meßkanals vor dem Ausgang eine Referenzelektrode am Meßkanal angeordnet ist; ferner daß auch ein besonderer Eingang für eine Spülflüssigkeit innerhalb des Deckels an dem Gehäusebauteil zwischen der Referenzelektrode und der Reihe der Meßelektroden vorgesehen ist.

Der oben angesprochene gekrümmte Meßkanal, der in einer Ausführung als Nut in einem insbesondere durchsichtigen Meßkanal-Zylinder angeordnet ist, wird in einer weiteren zweckmäßigen Ausgestaltung so ausgeführt, daß er nur teilweise in einem Meßkanal-Zylinder und teilweise spiegelsymmetrisch ergänzend in einer den Meßkanal-Zylinder umgebenden Zylinderbuchse jeweils als Nut mit abgerundeten Ecken angeordnet ist. Hierdurch wird eine verbesserte Anpassung an die Strömungsbedingungen erreicht, wobei insbesondere auch die Seite, an welcher die Sondenfläche der Meßelektrode liegt, strömungsgünstig gestaltet werden kann. Einbezogen wird dabei vorteilhaft eine Durchtrittsöffnung für einen Vorsprung der Meßelektrode mit in bezug zu dem Vorsprung größerem Querschnitt als die Erstreckung des Meßkanals senkrecht zur Achse des Vorsprunges, wobei der an der Außenseite des Vorsprungs angeordnete Abdichtungsring eine elastische Abstützung in bezug zu der unmittelbaren Anlage der vorderen Fläche der Meßelektrode am Rand der Durchtrittsöffnung bildet. Das erleichtert zugleich auch die Herstellung, ohne die Überwachung zu beeinträchtigen.

Die Erfindung wird im folgenden anhand eines bevorzugten Ausführungsbeispiels beschrieben, das in der Zeichnung dargestellt ist. In der Zeichnung zeigen:

Fig. 1 eine schematische Seitenansicht einer Meßanordnung im Schnitt;

Fig. 2 eine Draufsicht auf Fig. 1, gesehen in der Linie II - II in Fig. 1, d. h. bei abgenommenem Deckel;

Fig. 3 eine perspektivische Ansicht der Vorrichtung nach Fig. 1;

Fig. 4 eine schematische Seitenansicht einer anderen Ausführungsform in Teildarstellung;

Fig. 5 eine schematische Ansicht eines Meßkanalverlaufs zur Erläuterung einer abweichenden Ausführungsform;

Fig. 6 eine Teildarstellung aus Fig. 1 zur Erläuterung einer besonderen Ausführung des Meßkanals mit Zuordnung einer Meßelektrode;

Fig. 7 eine der Fig. 1 entsprechende schematische Seitenansicht mit einer abgewandelten Zentriervorrichtung für die Elektroden.

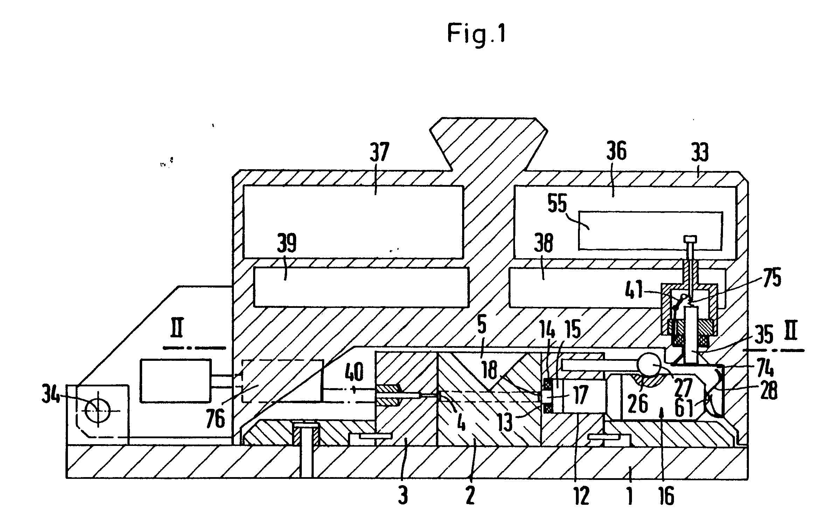

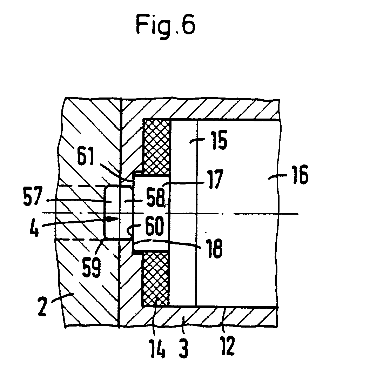

In den Figuren 1 - 3 ist eine bevorzugte Ausführung dargestellt. In dieser ist auf einem Unterteil 1 ein aus durchsichtigem Material, beispielsweise aus Plexi-Glas, ausgeführter Meßkanal-Zylinder 2 angeordnet, der von einer Zylinderbuchse 3 aus Kunststoff eingefaßt ist. In dem Meßkanal-Zylinder 2 ist etwa in mittlerer Höhe außen eine Umfangsnut, in der gezeigten Ausführung als Meßkanal 4, bezüglich der ergänzenden Ausführung nach Figur 6 wenigstens als ein Meßkanalteil mit abgerundeten Ecken eingeformt. Diese Umfangsnut ist bei der durchsichtigen Ausführung des Meßkanal-Zylinders 2 von oben durch eine Einbuchtung 5 zu überwachen. Die Überwachung wird dadurch erleichtert, daß die Einbuchtung 5 kegelförmig mit einem Flankenwinkel von 45° ausgeführt ist. Schon durch die abgerundeten Ecken ergibt sich eine Anpassung an das natürliche Strömungsprofil.

Die Zylinderbuchse 3 faßt den Meßkanal-Zylinder 2 mit Passung so eng ein, daß ein Flüssigkeitsaustritt an den Grenzflächen verhindert ist. Die Zylinderbuchse 3 hat radiale Einstecköffnungen 6 - 9 und Ein- und Ausgangsanschlüsse 10, 11, um eine Probenflüssigkeit ein- und abzuführen. Hierbei handelt es sich um Sera, die verdünnt oder konzentriert verwendet werden, Plasma einschließlich Vollblut und Körperflüssigkeiten. Dabei besteht das Problem darin, daß solche Flüssigkeiten auf kürzestem Wege in kleinster Menge untersucht werden müssen und daß zwischen aufeinanderfolgenden Proben solcher Flüssigkeiten keine Verschleppungsfehler auftreten. Es handelt sich um Volumina in der Größenordnung von etwa 30 μl.

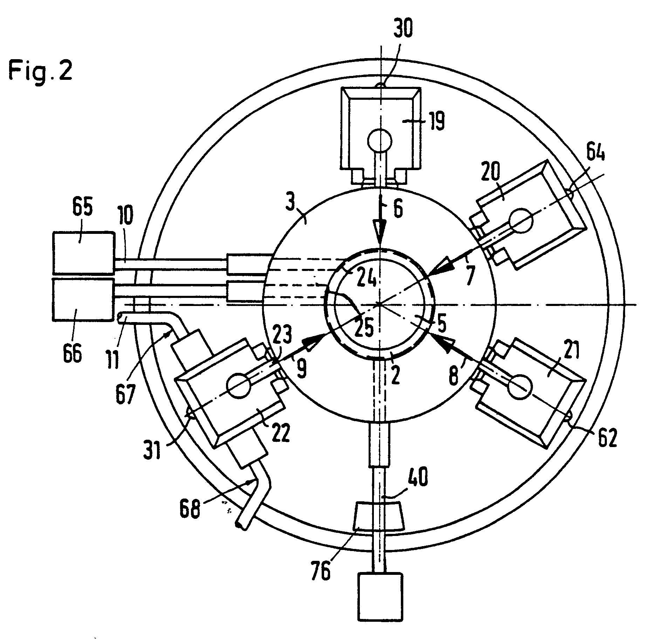

Diese Ein- und Ausgangsanschlüsse 10, 11 sind gemäß Fig. 2 auch mit Vorrichtungen 65, 66 versehen, welche Ventile oder auch einen Vorrat enthalten können sowie Pumpeneinrichtungen, so daß in diesem Zusammenhang auch von Ein- und Ausgangsanschlußvorrichtungen gesprochen werden kann.

Die Einstecköffnungen 6 - 9 in der Zylinderbuchse 3 bilden Lagervorrichtungen für Elektroden und sind, wie aus Fig. 1 erkennbar, von einer zylindrischen Öffnung 12 gebildet, an deren Ende vor einer Einschnürung 13 ein Abdichtungsring 14 angeordnet ist, an dem ein Kragen 15 derinsgesamt mit 16 bezeichneten Meßelektrode gedrückt wird.

Diese so bezeichneten Elektroden sind in der auf diesem Gebiet üblichen Weise Elektrodeneinrichtungen, die ein Führungsgehäuse und die leitenden Elemente umfassen. Eine solche Elektrode oder Elektrodeneinrichtung hat einen Vorsprung 17, der auf die Stärke des Abdichtungsringes 14 abgestimmt ist, so daß die vordere Fläche 18 fluchtend in der Außenwand des Meßkanals 4 liegt. Eine Abwandlung zur Gewährleistung einer genauen Einstellung der vorderen Fläche wird noch anhand der Figur 6 beschrieben.

Bei beispielsweise drei Meßelektroden 19 - 21 ist es problematisch, eine gleichmäßige Anordnung der Elektrodenflächen 18 einzustellen. Hinzu kommt, daß eine Referenzelektrode 22 entsprechend einer Meßelektrode 23 in den Meßkanal führt, und zwar in Durchström-Richtung vor dem Ausgangsanschluß 11 bzw. seiner entsprechenden Mündung 25 in das Ende des Meßkanals 4. Der Referenzelektrode 22 sind Ein- und Ausgangsanordnungen 67, 68 im Deckel zugeordnet. Der Meßkanal 4 ist zwischen der Mündung 24 des Eingangsanschlusses 10 und der bereits erwähnten Mündung 25 unterbrochen.

Wie aus Fig. 1 hervorgeht, haben die Meßelektroden und Referenzelekotroden 16; 19 - 21 jeweils oben eine Rastausnehmung 26, in welche als Rastelemente ein Schnäpper 27, d. h. im Ausführungsbeispiel ein Kugelkopf an einem Federarm eingreift, der an der Zylinderbuchse gelagert ist. Dieser Schnäpper 27 stellt sicher, daß die Elektroden soweit eingestellt werden, daß sie beim Aufbringen eines ausrichtenden Andrucksrelementes, beispielsweise eines Kranzes, sicher von den mit ihm aufzubringenden Andruckmitteln, insbesondere Federn 28, 29 erfaßt werden. Ein solches Andruckmittel kann auch in der vorteilhaften Ausführung als noch zu beschreibender Deckel ausgeführt sein. Die Ausnehmung 26 ist in radialer Richtung zu einer Mittelachse der Anordnung bzw. zur Längsachse der Meßelektrode größer als die Eingriffsfläche.

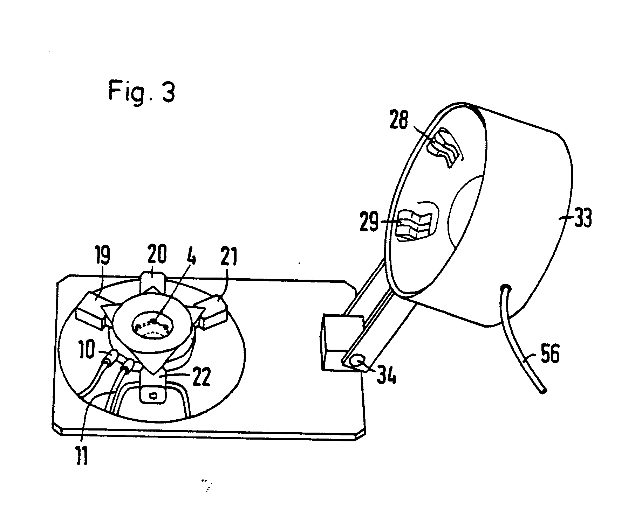

Für alle Elektroden ist ein äußerer Andruck durch Federn vorgesehen, von denen eine in Fig. 1 mit 28 bezeichnet ist. Solche Federn legen sich an die in Fig. 2 mit 30, 31, 62, 64 bezeichneten Kontaktstücke der Elektroden an. Die Federn sind entsprechend um den Umfang der Anordnung bzw. um die Mittelachse 32 verteilt. Die wechselseitige Nachgiebigkeit stellt daher nicht nur einen konzentrierenden Ausgleich sicher, sondern zugleich einen sich ausgleichenden gleichmäßigen Andruck aller Elektrodenflächen 18 an die Abdichtungsringe 14 am äußeren Umfang des Meßkanals 4. Hierbei werden auch alle Abdichtungsringe 14 gleichmäßig beaufschlagt. In Fig. 3 sind zwei Kontaktfedern 28, 29 im Deckel 33 erkennbar, die jeweils gleichen Abstand von der Mittellinie haben.

Dieser Vorteil wird besonders günstig dadurch erreicht, daß alle Andruckfedern 28, 29 an einem Kranz 69, insbesondere innerhalb eines Deckels 33 angeordnet sind, der mittels eines Gelenkes 34 klappbar an dem Unterteil 1 angelenkt ist.

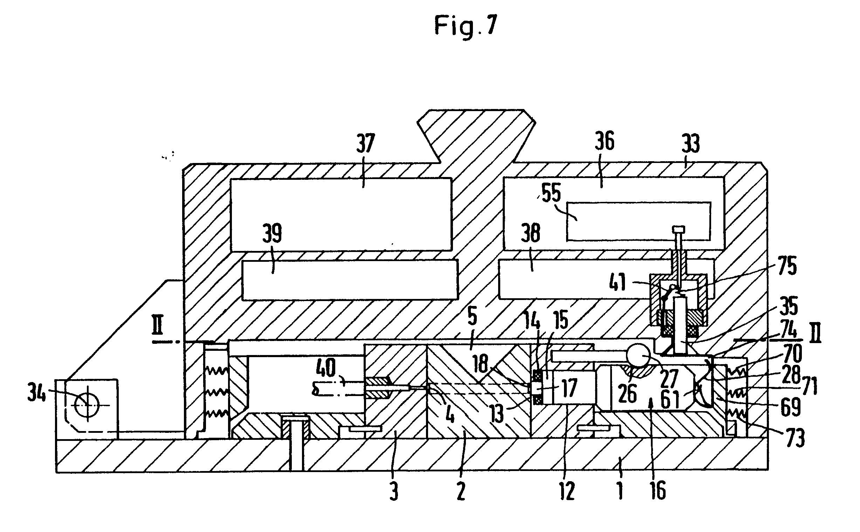

Der Kranz ist schwimmend im Deckel 33 gelagert. Zu diesem Zweck ist der Kranz 69 längs seines Umfanges mittels eines Federringes oder Kranzes oder beispielsweise mit Federbaugruppen, die um den Umfang verteilt sind und in der Darstellung jeweils drei Federn 70 - 73 haben, abgestützt. Es ist erkennbar, daß an diesem Kranz in einer solchen Ausführungsform die Andruckmittel, insbesondere Federn 28, 29, wie auch in Fig. 3 gezeigt ist, angeordnet sind, wobei diese Federn zugleich mit einem Kontaktstück 74 in Verbindung stehen, welches bei metallischer Ausführung des Deckels gegenüber diesem isoliert angebracht ist und den Anschluß zu einem Kontaktbolzen 35 herstellt. Besonders bei der Ausbildung mit dem Kranz 69 nach Fig. 7 ist das Kontaktstück 74 verschiebbar an dem Kontaktbolzen 35 geführt.

In der Ausführungsform nach Fig. 1 ist das Gelenk 34 des Deckels mit Spiel in jeder Richtung soweit ausgestattet, daß eine ausrichtende Anpassung unter der Reaktionswirkung der Feder 28 bzw. Federn 28, 29 zum gleichmäßigen Andruck der Elektroden erreicht wird.

Fig. 1 läßt erkennen, daß jede Feder 28, 29 mit einem Kontaktbolzen 35 verbunden ist, der einen unmittelbaren Anschluß zu Schaltbaugruppen 55 herstellt, die in den Räumen 36, 37 bzw. auch 38, 39 des Deckels untergebracht sind. Der Kontaktbolzen steht unter der Einwirkung einer Feder 75, die den Kontakt sicherstellt. Hierbei handelt es sich um Verstärker oder Wandler, deren unmittelbarer Anschluß Unempfindlichkeit gegen mechanische Erschütterungen herbeiführt, die bei Kontaktverbindungen auftreten. Es ist eine starre Verbindung vorhanden. In dem elektrischen Weg ist ein Schutzwiderstand 41 vorgesehen, der bei geöffnetem Deckel die angeschlossene Schaltung gegen den Einfluß einer Berührung sichert.

Beim Aufklappen des Deckels kann der Meßkanal 4 überwacht werden. Bezüglich Fig. 1 ist erkennbar, daß ein zusätzlicher Anschluß 40 vorhanden ist, welcher für eine besondere Spülflüssigkeitseinführung vorgesehen ist, die als Schlauchanschluß die Verbindung zu einer nicht näher gezeichneten Anschlußsteuerung herstellt. Dieser Anschluß kann bereits im Deckel in der Ausführung als Anschlußanordnung 76 ausgebildet sein, in welcher Sicherheitsventile angeordnet sind, während andere Steuer- und Pumpeneinrichtungen und Vorräte außerhalb des Deckels in der Anschlußsteuerung angeordnet sind.

Die Fig. 1 - 3 zeigen die bevorzugte Ausführungsform mit einem kreisförmigen bzw. fast geschlossenen im wesentlichen C-förmigen, d. h. offenen Meßkanal 4. Dabei ist erkennbar, daß die Elektroden sternförmig angeordnet sind, so daß für ihre äußeren Anschlüsse bei Konzentrierung des Meßkanals auf kleinste Erstreckung erheblicher Raum zur Verfügung steht.

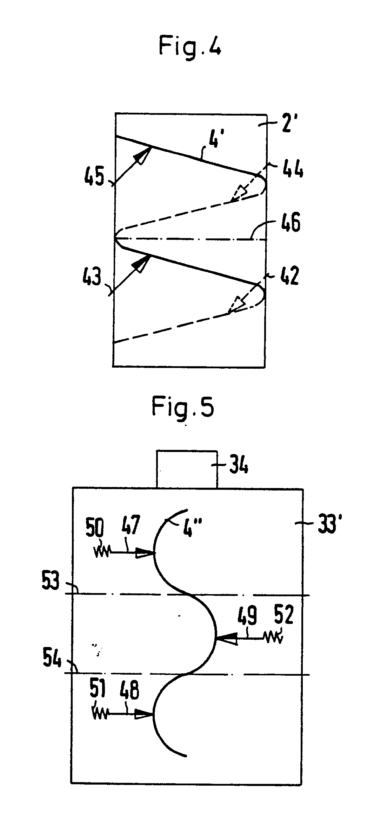

Fig. 4 zeigt unter Darstellung nur eines Meßkanalzylinders 2' auch eine schraubenlinienförmige Anordnung eines Meßkanals 4', wobei Elektroden entsprechend den Pfeilen 42 - 45 um den Umfang versetzt auch in verschiedener Höhe untereinander jeweils von außen einmündend angeordnet sind. Ein solcher Meßkanalzylinder ist durch eine eingezeichnete Trennungslinie 46 unterteilt, d. h. scheibenweise aufgebaut, so daß in dieser Ausführung eine beliebige Anzahl von Meßelektroden angebracht werden kann, die alle sternförmig zu einer Mittelachse vorgesehen und durch wenigstens einen Federkranz gleichförmig angedrückt sind.

Dieses bedeutet, daß eine eingebrachte und abgeführte Probenflüssigkeit, die durch Druck, gegebenenfalls Ansaugdruck, hindurchgeführt wird, aufgrund der sich ergebenden Kräfte an der Außenseite des Meßkanals strömt, an der die Meßelektrodenflächen liegen, so daß diese durch die Vorbeiströmung einmal intensiv gereinigt werden, zum anderen aber bei Stillstand der Flüssigkeit zur Messung intensiv benetzt sind. Wenn bei der kleinen Größe des Meßkanals überhaupt Kavitationserscheinungen auftreten, sind diese allenfalls an einer den Meßelektroden gegenüberliegenden Wand vorhanden und somit ohne Einfluß.

Ein Meßkanal 4″ nach Fig. 5 ist schlangenlinienförmig ausgeführt und jeweils in den gekrümmten Abschnitten ist an der Außenseite der Krümmungen eine Meßelektrode 47, 48, 49 angeordnet. Auch solche Meßelektroden können durch einen gemeinsamen Deckel 33′ mit einem Spiel aufweisenden Gelenk 34′ durch Federn 50 - 52 ausgleichend angedrückt werden, wie oben beschrieben ist. Die Ein- und Ausgänge sind in Fig. 5 nicht näher beschrieben, ergeben sich aber aus den vorhergehenden Beschreibungen. Die Ausführung nach Fig. 5 hat den Vorteil, daß eine abschnittsweise Unterteilung entsprechend den Trennlinien 53, 54 möglich ist, um elektrodenfreie oder mit Elektroden versehene Abschnitte einzusetzen, so daß eine Anpassung hinsichtlich der Anzahl der Meßzellen immer unter Aufrechterhaltung der Vorteile möglich ist.

Zur Vervollständigung wird bemerkt, daß gemäß Fig. 3 in dem Deckel 33 ein Versorgungskabel 56 geführt ist.

Die Fig. 6 zeigt in vergrößertem Maßstab den Teil aus der Fig. 1, der den Vorsprung 17 mit der vorderen Fläche 18 der Meßelektrode, den Abdichtungsring 14 und auch den zugeordneten Teil des Meßkanals umfaßt, um eine andere Ausführung des Meßkanals mit einer ebenfalls besonderen Ausführung der Anlage der Meßelektrode zu erläutern.

Erkennbar sind ein Abschnitt des Meßkanal-Zylinders 2 und des anliegenden Teils der Zylinderbuchse 3. Der Meßkanal besteht in dieser Ausführung aus zwei zueinander spiegelsymmetrisch ergänzend angeordneten Nuten 57, 58 im Meßkanal-Zylinder 2 einerseits und in der Zylinderbuchse 3 andererseits. Deutlich erkennbar ist, daß diese Nuten jeweils abgerundete Ecken haben, wie bei 59, 60 beispielsweise gezeigt ist. Dieser Meßkanal hat eine geringere Erstreckung bezüglich Figur 2 in der Höhe als dem Durchmesser des Vorsprunges 17 der Meßelektrode 16 entspricht. Die vordere Fläche 18 des Vorsprunges liegt unmittelbar an dem Rand des im ganzen mit 4 bezeichneten Meßkanals, d. h. an dem Rand der Nut 58 an, die neben den abgerundeten Ecken 60 zur Meßelektrode 16 hin offen ist. Es ist erkennbar, daß die zylindrische Öffnung als Lagervorrichtung durch die Einschnürung 13 eine Durchtrittsöffnung zum Meßkanal bildet, so daß dann mittels des Abdichtringes 15 eine sichere Anlage der Stufe an einer Meßelektrode zum Vorsprung 17 hin und andererseits an der Einschnürung erreicht wird.

Bei dieser Ausführung ist die Stärke des Abdichtungsringes 14 auf die Länge des Vorsprunges 17 abgestimmt, so daß bei dieser Anlage der vorderen Fläche 18 an den herumlaufenden Rand 61 und der Meßkanalöffnung eine Kompression des Abdichtungsringes 14 erfolgt.

Diese Ausführung ist besonders strömungsgünstig.

Es versteht sich, daß auch der Meßkanal 4 nach Fig. 1 abgerundete Ecken wie 59 der Nut 57 haben kann, wobei auch aus Fig. 1 erkennbar ist, daß der Meßkanal 4 geringere Höhe hat als der Durchmesser des Vorsprunges 17 beträgt. Die Verlagerung des Randes 61 des Meßkanals 4 nach Fig. 6 in die Zylinderbuchse 3 hat den Vorteil, daß die Abstützelemente für die Meßelektrode 16 im gleichen Bauteil liegen. Der Meßkanal selbst ist durch die Passung zwischen Meßkanal-Zylinder 2 und Zylinderbuchse 3 dicht.

Der Meßkanal 4 hat einen geringen Querschnitt, und zwar in einer beispielsweisen Ausführungsform eine Höhe von 2 mm und eine Tiefe von 0,3 mm, gesehen von der Elektrode her.

Zu den Elektroden und der Meßtechnik wird beispielsweise die US-PS-4 366 040 genannt.

**Patentansprüche**

1. Meßanordnung mit ionenselektiven Elektroden (16, 19-22; 42 - 45; 47 - 49) an einem Meßkanal (4, 4′, 4″) mit Ein- und Auslässen (10, 11), wobei die Elektroden an der Wand dieses Meßkanals fluchtend zur Wand angeordnet sind, dadurch gekennzeichnet, daß der Meßkanal (4, 4′, 4″) im Bereich und einschließlich des Durchströmungsabschnittes vor und hinter jeder Elektrode (16, 19 - 22; 42 - 45; 47 - 49) gekrümmt ausgeführt ist und die Elektroden (16, 19 - 22; 42 - 45; 47 - 49) jeweils in der bezüglich der Krümmung äußeren Wand angeordnet sind.

2. Anordnung nach Anspruch 1, dadurch gekennzeichnet, daß eine Abschirmung aus einer geschlossenen, elektrisch leitenden Abdeckung, insbesondere in Form eines metallischen Deckels (33), für eine Ausführung in einem Gerätegehäuse als Unterteil (1) vorgesehen ist.

3. Anordnung nach Anspruch 2, in welcher für alle Elektroden Kontakt- und Andruckfedern (28, 29; 50 - 52) vorgesehen sind, dadurch gekennzeichnet, daß der Deckel (33) durch ein Gelenk (34) angelenkt ist, welches zur Führung des Deckels (33) und Selbstausrichtung aufgrund der Reaktionskräfte an enthaltenen Kontakt- und Andruckfedern (28, 29) ein Spiel aufweist und selbstausrichtend nachgiebig gelagert ist.

4. Anordnung nach Anspruch 2 oder 3, dadurch gekennzeichnet, daß in dem Deckel (33) Elemente einer Auswertschaltung (55) mit Wandlern und Verstärkern angeordnet sind und zwischen den Kontakt- und Andruckfedern (28, 29) und der Auswertschaltung ein durchgehender Kontaktbolzen (35) als mechanisch starre elektrische Verbindung angeordnet ist, in der ein Schutzwiderstand (41) angeordnet ist.

5. Anordnung nach einem der Ansprüche 1 bis 4, dadurch gekennzeichnet, daß der Meßkanal (4, 4', 4'') aus mehreren, gegebenenfalls gegensinnig gekrümmten Abschnitten besteht, und in jedem Abschnitt eine Elektrode (16, 19 - 22; 42 - 45; 47 - 49) angeordnet ist.

6. Anordnung nach einem der Ansprüche 1 bis 4, dadurch gekennzeichnet, daß der Meßkanal (4') in Form einer Schraubenlinie ausgeführt ist und die Elektroden (42 - 45) in verschiedener Höhe angeordnet sind.

7. Anordnung nach einem der Ansprüche 1 bis 4, dadurch gekennzeichnet, daß der Meßkanal (4) im wesentlichen kreisförmig, jedoch mit Anfang und Ende in Abstand auf der Kreislinie ausgeführt ist und die Elektroden (16, 19 - 22) insbesondere sternförmig außen angeordnet sind.

8. Anordnung nach Anspruch 6 oder 7 mit Kontakt- und Andruckfedern für die Elektroden, dadurch gekennzeichnet, daß die Elektroden in radiale Stecköffnungen (6 - 9) eingesetzt sind und für alle Elektroden (16, 19 - 22; 42 - 45) wenigstens ein konzentrischer Kranz von Kontakt- und Andruckfedern (28, 29) vorgesehen ist.

9. Anordnung nach Anspruch 7 und 8, dadurch gekennzeichnet, daß an dem den Meßkanal (4) enthaltenden im wesentlichen runden Gehäusebauteil parallel zu den Stecköffnungen (6 - 9) Rastfedern (27) für die Elektroden angeordnet sind, welche in Rastausnehmungen (26) eingreifen, die an den Elektroden vorgesehen und länger als das Rastelement ausgeführt sind.

10. Anordnung nach Anspruch 9, in welcher der Meßkanal in durchsichtigen Bauteilen geführt ist, dadurch gekennzeichnet, daß in dem runden Gehäusebauteil ein zentrisch in ihm angeordneter durchsichtiger Meßkanal-Zylinder (2) vorgesehen ist, welcher eine nach oben offene Einbuchtung (5) zur visuellen Kontrolle des Meßkanals aufweist.

11. Anordnung nach Anspruch 10, dadurch gekennzeichnet, daß die Einbuchtung (5) als kegelförmige nach oben offene Ausnehmung ausgeführt ist, die einen Flankenwinkel von etwa 45° besitzt.

12. Anordnung nach einem der Ansprüche 2 bis 4, dadurch gekennzeichnet, daß innerhalb des Deckels (33) im Verlauf des Meßkanals vor dem Ausgang (11) eine Referenzelektrode (22) am Meßkanal (4) angeordnet ist.

13. Anordnung nach Anspruch 12, gekennzeichnet durch einen besonderen Eingang für eine Spülflüssigkeit innerhalb des Deckels (33) an dem Gehäusebauteil zwischen der Referenzelektrode (22) und der Reihe der Meßelektroden (16, 19 - 21).

14. Anordnung nach einem der Ansprüche 1 und 5 bis 7, dadurch gekennzeichnet, daß der Meßkanal (4) teilweise in einem Meßkanal-Zylinder (2) und teilweise spiegelsymmetrisch ergänzend in einer den Meßkanal-Zylinder (2) umgebenden Zylinderbuchse (3) jeweils als Nut (57, 58) mit abgerundeten Ecken (59, 60) ausgeführt ist.

15. Anordnung nach einem der Ansprüche 1, 5 bis 7 und 14, dadurch gekennzeichnet, daß eine Durchtrittsöffnung für einen Vorsprung (17) der Meßelektrode (16) in bezug zu dem Vorsprung (17) größeren Querschnitt als die Erstreckung des Meßkanals (4) senkrecht zur Achse des Vorsprunges (17) hat und der an der Außenseite des Vorsprunges (17) angeordnete Abdichtungsring (14) eine elastische Abstützung in bezug zu der unmittelbaren Anlage der vorderen Fläche (18) der Meßelektrode (16) am Rand (61) der Durchtrittsöffnung bildet.

**Claims**

1. A measuring arrangement comprising ion-selective electrodes (16, 19 to 22; 42 to 45; 47 to 49) provided at a measuring passage (4, 4', 4'') provided with inlet and outlet ports (10, 11), wherein the electrodes are disposed at and flush with the wall of said measuring passage, characterized in that the measuring passage (4, 4', 4'') is curved adjacent to and at the flow passage portion preceding and succeeding each electrode (16, 19 to 22; 42 to 45; 47 to 49) and one electrode (16, 19 to 22; 42 to 45; 47 to 49) is disposed in the wall which is on the outside of the bend.

2. An arrangement according to claim 1, characterized in that a shield consisting of a closed electrically conducting covering, particularly of a metallic cover (33), is provided for use as a base part (1) in an apparatus housing.

3. An arrangement according to claim 2, wherein contact and pressure-applying springs (28, 29; 50 to 52) are provided for all electrodes, characterized in that the cover (33) is pivoted by a hinge (34), which provides for a lost motion and is yieldable for self-alignment so that the cover (33) is guided and is self-aligning under the reaction forces on contact and pressure-applying springs (28, 29), which are provided.

4. An arrangement according to claim 2 or 3, characterized in that elements of an evaluating circuit (55) comprising transducers and amplifiers are disposed in the cover (33) and a continuous contact pin (35), which constitutes a mechanically rigid electrical link that includes a protective resistor (41), is disposed between the contact and pressure-applying springs (28, 29) and the evaluating circuit.

5. An arrangement according to any of claims 1 to 4, characterized in that the measuring passage (4, 4', 4") consists of a plurality of sections which are optionally curved in mutually opposite senses, and an electrode (16, 19 to 22; 42 to 45; 47 to 49) is provided in each section.

6. An arrangement according to any of claims 1 to 4, characterized in that the measuring passage (4') constitutes a helix and the electrodes (42 to 45) are disposed on different levels.

7. An arrangement according to any of claims 1 to 4, characterized in that the measuring passage (4) is substantially circular, but its inlet and outlet ends are spaced from the circle and the electrodes (16, 19 to 22) are disposed on the outside particularly in a star-shaped configuration.

8. An arrangement according to claim 6 or 7, comprising contact and pressure-applying springs for the electrodes, characterized in that the electrodes have been inserted into radial plug-in openings (6 to 9) and at least one concentric circular array of contact and pressure-applying springs (28, 29) is provided for all electrodes (16, 19 to 22; 42 to 45).

9. An arrangement according to claims 7 and 8, characterized in that the substantially circular housing part which contains the measuring passage (4) is provided with detent springs (27) for the electrodes, which springs are parallel to the plug-in openings (6 to 9) and extend into detent openings (26), which are provided on the electrodes and are longer than the detent element.

10. An arrangement according to claim 9, wherein the measuring passage extends in transparent parts, characterized in that the circular housing part is formed with a centrally disposed, transparent measuring passage cylinder (2), which has an open-topped depression (5) for a visual inspection of the measuring passage.

11. An arrangement according to claim 10, characterized in that the depression (5) consists of an open-topped conical recess having a flank angle of about 45°.

12. An arrangement according to any of claims 2 to 4, characterized in that a reference electrode (22) is provided at the measuring passage (4) within the cover (13) and precedes the outlet (11).

13. An arrangement according to claim 12, characterized in that a special inlet for a rinsing liquid is provided within the cover (33) on the housing part extending between the reference electrode (22) and the series of measuring electrodes (16, 19 to 21).

14. An arrangement according to any of claims 1 and 5 to 7, characterized in that the measuring passage (4) comprises a portion which is formed in a measuring passage cylinder (2) and, as a mirror image of said portion, a portion that is formed in a cylindrical bushing (3) which surrounds the measuring passage cylinder (2), and each of said portions consists of a groove (57) having rounded corners (59, 60).

15. An arrangement according to any of claims 1, 5 to 7 and 14, characterized in that a passage opening for receiving a projection (17) of the measuring electrode (16) in respect of the projection (17) has a cross-section which exceeds the extent of the measuring passage (4) at right angles to the axis of the projection (17), and the sealing ring provided on the outside of the projection (17) constitutes an elastic support relative to the direct engagement between the forward surface (18) of the measuring electrode (16) and the rim (61) of the passage opening

**Revendications**

1. Dispositif de mesure avec des électrodes à sélectivité ionique (16, 19 à 22; 42 à 45; 47 à 49) montées au niveau d'un canal de mesure (4, 4', 4") muni d'entrées et de sorties (10, 11), les électrodes étant disposées sur la paroi du canal de mesure au ras de cette paroi, caractérisé en ce que le canal de mesure (4, 4', 4") est réalisé sous une forme courbée au niveau de chaque électrode (16, 19 à 22; 42 à 45; 47 à 49), y compris le tronçon d'écoulement en amont et en aval de chaque électrode, et en ce que les électrodes (16, 19 à 22; 42 à 45; 47 à 49) sont chacune montées dans la paroi extérieure par rapport à la courbure.

2. Dispositif selon la revendication 1, caractérisé en ce qu'une protection constituée par une couverture fermée électriquement conductrice, en particulier sous la forme d'un couvercle métallique (33), est prévue pour une forme de réalisation où le dispositif se trouve dans une enveloppe d'appareillage réalisée en tant que partie inférieure (1).

3. Dispositif selon la revendication 2, dans lequel des ressorts de contact et d'appui (28, 29; 50 à 52) sont prévus pour toutes les électrodes, caractérisé en ce que le couvercle (33) est articulé au moyen d'une articulation (34) qui, en vue du guidage du couvercle (33) et d'une orientation automatique en vertu des forces de réaction au niveau de ressorts de contact et d'appui (28, 29) contenus dans le dispositif, présente un certain jeu et est monté de manière flexible de façon à s'aligner d'elle-même.

4. Dispositif selon la revendication 2 ou 3, caractérisé en ce que dans le couvercle (33) sont disposés des éléments d'un montage (55) d'analyse ou d'exploitation de données avec des convertisseurs et amplificateurs et en ce qu'entre les ressorts de contact et d'appui (28, 29) et le montage d'exploitation est montée une broche de contact continue (35) en tant que liaison électrique mécaniquement rigide dans laquelle se trouve une résistance protectrice (41).

5. Dispositif selon l'une quelconque des revendications précédentes, caractérisé en ce que le canal de mesure (4, 4', 4") est constitué par plusieurs tronçons éventuellement courbés en sens opposé les uns par rapport aux autres et en ce que dans chaque tronçon est montée une électrode (16, 19 à 22; 42 à 45; 47 à 49).

6. Dispositif selon l'une quelconque des revendications 1 à 4, caractérisé en ce que le canal de mesure (4') est réalisé sous la forme d'une hélice et les électrodes (42 à 45) sont disposées à des hauteurs différentes.

7. Dispositif selon l'une quelconque des revendications 1 à 4, caractérisé en ce que le canal de mesure (4) est sensiblement circulaire mais avec une entrée et une sortie espacées sur la circonférence et en ce que les électrodes (16, 19 à 22) sont disposées extérieurement en particulier en forme d'étoile.

8. Dispositif selon la revendication 6 ou 7, avec des ressorts de contact et d'appui pour les électrodes, caractérisé en ce que les électrodes sont placées dans des ouvertures d'engagement radiales (6 à 9) et en ce que pour toutes les électrodes (16, 19 à 22; 42 à 45) est prévue au moins une couronne concentrique de ressorts de contact et d'appui (28, 29).

9. Dispositif selon la revendication 7 ou 8, caractérisé en ce que sur la partie d'enveloppe sensiblement circulaire contenant le canal de mesure (4) sont montés, parallèlement aux ouvertures d'engagement (6 à 9), des ressorts d'arrêt (27) pour les électrodes, lesquels ressorts s'engagent dans des crans d'arrêt (26) qui sont prévus dans les électrodes et sont plus longs que l'élément d'arrêt.

10. Dispositif selon la revendication 9, dans lequel le canal de mesure s'étend dans des éléments de construction transparents, caractérisé en ce que dans la partie d'enveloppe circulaire est prévu un cylindre à canal de mesure transparent (2) qui, disposé centralement dans cette partie d'enveloppe, présente une échancrure (5) ouverte vers le haut pour le contrôle visuel du canal de mesure.

11. Dispositif selon la revendication 10, caractérisé en ce que l'échancrure (5) est réalisée sous forme d'évidement conique ouvert vers le haut et qui présente un angle à flancs d'environ 45°.

12. Dispositif selon l'une quelconque des revendications 2 à 4, caractérisé en ce qu'à l'intérieur du couvercle (33), en un point du canal de mesure situé devant la sortie (11), une électrode de référence (22) est montée au niveau du canal de mesure (4).

13. Dispositif selon la revendication 12, caractérisé par une entrée spéciale pour un liquide de rinçage prévue à l'intérieur du couvercle (33) sur ladite partie d'enveloppe entre l'électrode de référence (22) et la série d'électrodes de mesure (16, 19 à 21).

14. Dispositif selon l'une quelconque des revendications 1 et 5 à 7, caractérisé en ce que le canal de mesure (4) est ménagé partiellement dans un cylindre à canal de mesure (2) et pour une autre partie de façon symétriquement complémentaire dans une douille cylindrique (3) entourant le cylindre à canal de mesure (2), et ce respectivement en tant que rainure (57, 58) avec des angles arrondis (59, 60).

15. Dispositif selon l'une quelconque des revendications 1, 5 à 7 et 14, caractérisé en ce qu'une ouverture de passage pour une saillie (17) de l'électrode de mesure (16) présente, par rapport à la saillie (17), une section plus grande que l'étendue du canal de mesure (4) perpendiculairement à l'axe de la saillie (17) et en ce que la bague d'étanchéité (14) disposée sur le côté extérieur de la saillie (17) forme un support élastique pour l'appui direct de la face avant (18) de l'électrode de mesure (16) contre le bord (61) de l'ouverture de passage.

# Fig.1

Fig.2

Fig. 3

Fig.4

Fig.5

## Fig.6

# Fig.7